# EUROPEAN PATENT SPECIFICATION

(11) **EP 1 712 778 B1**
(45) Date of publication and mention of the grant of the patent: **18.06.2008**
(21) Application number: 06112504.3
(22) Date of filing: 11.04.2006
(51) Int. Cl.: F02M 69/04, F02M 69/46

(54) **Fuel injection device**
Kraftstoffeinspritzvorrichtung
Dispositif d'injection de carburant

(30) Priority: 11.04.2005 JP 2005113669
(43) Date of publication of application: 18.10.2006
(73) Proprietor: Keihin Corporation, Shinjuku-ku, Tokyo (JP)
(72) Inventor: Kondo, Yasushi c/o Kawasaki Plant, Keihin Corp., Kanagawa (JP)
(74) Representative: Viering, Jentschura & Partner

(56) References cited:
- EP-A- 1 398 498
- EP-A- 1 403 507
- EP-A1- 1 493 915
- EP-B1- 1 096 138

## Description

### BACKGROUND OF THE INVENTION

### Field of the Invention

The present invention relates to a fuel injection device for supplying fuel toward an internal combustion engine through a fuel injection valve, and more particularly, a fuel injection device, which comprises a first fuel injection valve for injecting and supplying fuel for low-speed and a second fuel injection valve for injecting and supplying fuel for high-speed, and is mounted on a motorcycle.

EP 1 403 507 A, EP 1398 498 A and EP 1 493 915 A disclose a fuel injection device with at least one first and one second fuel injector. The second fuel injector is coaxial with a longitudinal axis of the air intake passage and is arranged in an air intake box. The second fuel injector is mounted in a wall of the air intake box that is about perpendicular to the longitudinal axis of the air intake passage.

A conventional fuel injection device has indicated in Japanese Patent Application Laid Open No. 2004-100632, where the device is mountedon a motorcycle and comprises a first fuel injection valve for low-speed and a second fuel injection valve for high-speed.

The conventional fuel injection device will be described using Figure 12 obtained by simplifying Figure 7 of the above-described Patent Publication. Code 70 is a throttle body, in which an intake passage 71 is provided through in the vertical direction inside thereof, and the intake passage is opened/closed by a throttle valve 72. A first fuel injection valve J1 for injecting fuel for low-speed toward the inside of the intake passage 71 is mounted at the throttle body 70.

The throttle body is mounted at a bottom wall portion 73a of an air box 73 comprising a filter element, which is not illustrated in the drawings, and upwardly opened in the air box 73 through an air funnel 74.

As for the bottom wall portion 73a of the air box 73, a right end thereof is bent approximate- rectangularly and upwardly to thereby form a side wall portion 73b, and an upper end of the side wall portion 73b is bent approximate-rectangularly and inwardly to thereby form an upper wall portion 73c.

As described above, the upper wall portion 73c is formed approximate-parallelly with the bottom wall portion 73a.

Further, a second fuel injection valve J2 for high-speed is mounted at the upper wall portion 73c. At this time, a longitudinal axial line X-X of the intake passage 71 of the throttle body 70 including the air funnel 74 is provided coaxially with a longitudinal axial line Y-Y of the second fuel injection valve J2.

The reason why the longitudinal axial line X-X of the intake passage 71 is provided coaxially with the longitudinal axial line Y-Y of the second fuel injection valve J2 is as follows. When these lines are provided coaxially, the atomized fuel can be smoothly supplied to the engine without the fuel injected from the second fuel injection valve J2 being collided to the side wall to be condensed.

Further, the longitudinal axial line X-X of the intake passage 71 can be easily provided coaxially with the longitudinal axial line Y-Y of the second fuel injection valve J2 , by providing the bottom wall portion 73a of the air box 73 approximate-parallelly with the upper wall portion 73c, providing the throttle body 70 including the air funnel 74 approximate-perpendicularly with the bottom wall portion 73a, and providing the second fuel injection valve J2 approximate-perpendicularly with the upper wall portion 73c.

According to such the conventional example, firstly, the fuel injected from the second fuel injection valve J2 cannot be supplied toward the center of the intake passage 71 accurately.

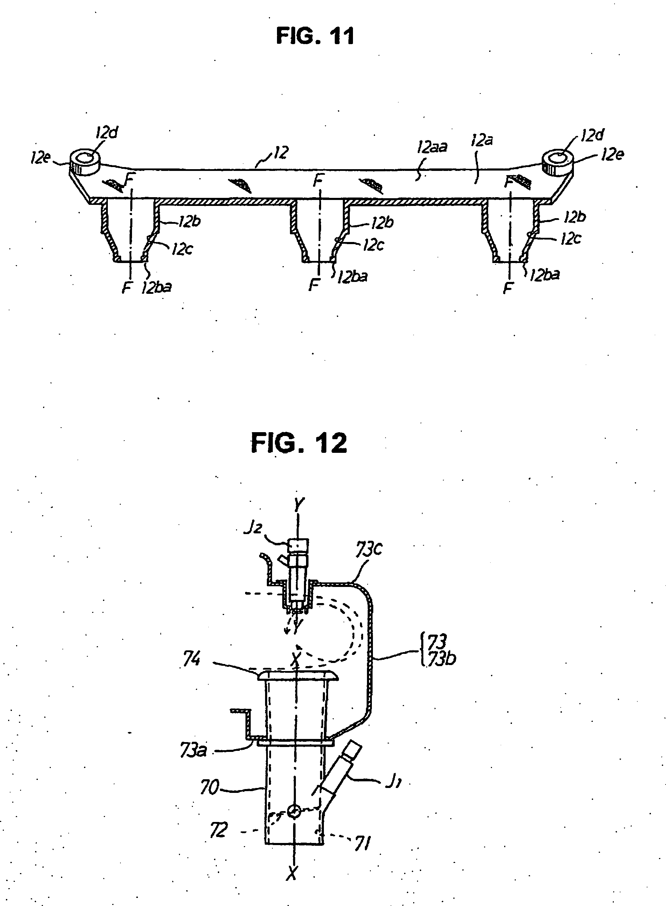

The reason of this is as follows. Air flowing in the air box 73 toward the air funnel 74 flows in the horizontal direction in Figure 12 along the upper wall portion 73c of the air box 73, and the flowing air is collided to the side wall portion 73b and reversed, and thus, a whirling flow is generated. By such the whirling flow, the fuel injected from the second fuel injection valve J2 is deflected in one side or the flowing of the fuel is diffused in the multidirection. Thus, supplying of the fuel toward the center of the intake passage 71 is prevented.

Secondly, suction efficiency of the sucked air flowing into the intake-passage 71 is reduced.

The reason of this phenomenon is that the flow of the air flowing into the intake passage 71 is prevented by the above-described whirling flow.

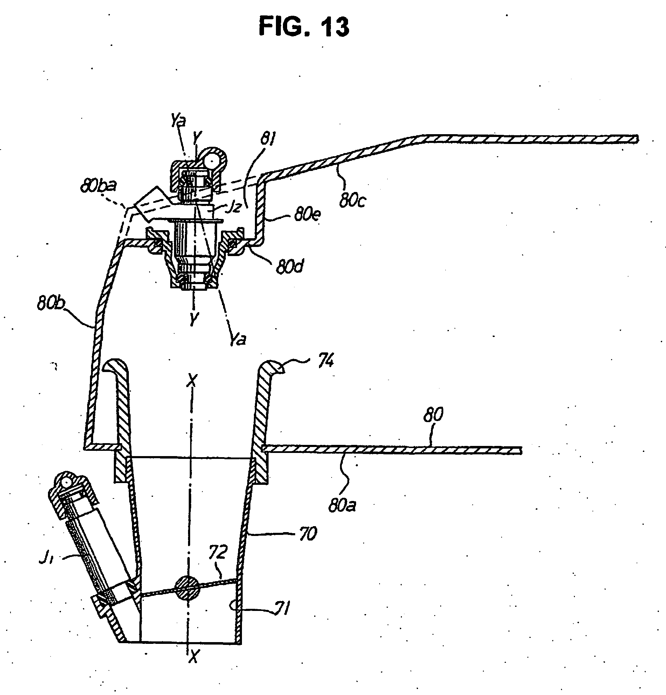

Therefore, in order to solve the above-described problems, a fuel injection device illustrated in Figure 13 has been used conventionally.

This device will be described using Figure 13. In this case, same codes are used to parts having substantially same structures as those of Figure 12, and descriptions are omitted.

A left end of a bottom portion 80a of an air box 80 is upwardly bent to thereby form a side wall portion 80b, and an upper end 80ba of the side wall portion 80b is bent rightwardly to thereby connect it with an upper wall portion 80c having an inclined surface.

Further, a part of the upper wall portion 80c having the inclined surface faces to an opening of the air funnel 74 , and is recessed with a horizontal wall portion 80d in parallel to the bottom portion 80a.

Such the horizontal wall portion 80d is provided in order to provide the longitudinal axial line Y-Y of the second fuel injection valve J2 coaxially with the longitudinal axial line X-X of the intake passage 71.

(If the second fuel injection valve J2 is directly provided at the upper wall portion 80c having the inclined surface without providing the horizontal wall portion 80d, a longitudinal axial line Ya-Ya of the second fuel injection valve J2 is provided inclining with respect to the longitudinal axial line X-X of the intake passage 71 as described in Figure 13 and thus, both of the longitudinal axial lines Ya-Ya and X-X cannot be provided coaxially.)

As described above, since the second fuel injection valve J2 is provided on the horizontal wall portion 80d, the longitudinal axial line X-X of the intake passage 71 and the longitudinal axial line Y-Y of the second fuel injection valve J2 can be provided coaxially.

### Summary of the Invention

According to the above-described conventional fuel injection device illustrated in Figure 13, the air flowing along the upper wall portion 80c having the inclined surface is collided to a connecting wall portion 80e, which is projected largely and downwardly from the upper wall portion 80c in order to form the horizontal wall portion 80d. Thereby, the flow of the air flowing from the air box 80 into the air funnel is remarkably disturbed. Thus, even through the second fuel injection valve J2 is provided coaxially with the intake passage 71, it is hard to supply the fuel toward the center of the intake passage 71 from the second fuel injection valve J2.

Further, when the above-described flow of the air is remarkably disturbed, the suction efficiency of the sucked air flowing into the intake passage 71 through the air funnel 74 is reduced.

Furthermore, a chamber capacity in the air box 80 is remarkably reduced corresponding to a recessed portion 81 formed by the horizontal wall portion 80d and the connecting wall portion 80e. Thus, in the motorcycle especially in which all housing space including the air box 80 is remarkably limited, it is remarkably hard to increase in size of the air box 80 in order to recover the reduced chamber capacity.

The present invention solves the above-described problems, and an objective of the present invention is to provide a fuel injection device, in which fuel injection from a second fuel injection valve toward an intake passage of a throttle body through an air funnel is accurately injected toward a center of the intake passage, reduction of suction efficiency of air sucked into the intake passage can be prevented, and a chamber capacity of an air box is not remarkably reduced. This fuel injection device is suitable for a motorcycle especially.

A first aspect of the fuel injection device of the present invention in order to obtain the above-described objective is as follows.

A fuel injection device, comprising
a throttle body (70) provided in an air box (1) f rom a bottom wall portion (1a) of the air box (1) through an air funnel (74), in which the throttle body (70) has an intake passage (71) provided through the inside thereof, and the intake passage (71) is opened/closed by a throttle valve (72),
a first fuel injection valve (J1) provided to the throttle body (72) toward the intake passage (71) at the down stream side from the throttle valve (72),
a second fuel injection valve (J2) provided at an upper wall, portion of the air box (1) facing to an opening portion (74a) of the air funnel (74), so as to be coaxial with a longitudinal axial line (X-X) of the intake passage (71),
an inclined wall surface (1c) formed toward the upper wall portion of the air box (1) from an upper end (1ba) of a side wall portion (1b) which extends upward from a bottom wall portion (1a) of the air box (1), so as to cross with the longitudinal axial line (X-X) of the intake passage (71) at an angle (A) in a range of 30 degrees to 60 degrees, the inclined wall surface (1c) being provided with an opening portion (1d) which is coaxial with the longitudinal axial line (X-X) of the intake passage (71), and
a holder member (2) formed with a mounting flange portion (2a) contacting on the inclined wall surface (1c) of the air box (1), an injection valve inserting cylindrical portion (2b) protruding downward from the mounting flange portion (2a), and an injection valve inserting hole (2c) provided from an upper end (2aa) of the mounting flange portion (2a) toward a lower end (2ba) of the injection valve inserting cylindrical portion (2b),
wherein the mounting flange portion (2a) of the holder member (2) is fixedly provided so as to contact on the inclined wall surface (1c) of the air box (1), the injection valve inserting cylindrical portion (2b) is inserted and provided in the air box (1) from the opening portion (1d) of the inclined wall surface (1c), and the second fuel injection valve (J2) is inserted and provided in the injection valve inserting hole (2c) of the holder member (2) so that a longitudinal axial line (Y-Y) of the second fuel injection valve (J2) is provided coaxially with the longitudinal axial line (X-X) of the intake passage (71).

Further, a second aspect of the present invention in addition to the above-described first aspect is as follows.

A fuel injection device, comprising
a plurality of throttle bodies (70), in which the throttle bodies (70) have intake passages (71) provided through the insides thereof, the intake passages (71) being opened/closed by throttle valves (72), and the throttle bodies (70) being provided in an air box (11) from a bottom wall portion (11a) of the air box (11) through air funnels (74),
first fuel injection valves (J1) provided to the throttle bodies (70) toward the intake passages (71) at the down stream side from the throttle valves (72),
a plurality of second fuel injection valves (J2) provided at an upper wall portion of the air box (11) facing to opening portions (74a) of the respective air funnels (74), so as to be coaxial with longitudinal axial lines (X-X) of the respective intake passages (71),
a single common inclined wall surface (11c) formed toward the upper wall portion of the air box (11) from an upper end (11ba) of a side wall portion (11b) which extends upward from a bottom wall portion (11a) of the air box (11), so as to cross with the longitudinal axial lines (X-X) of the intake passages (71) at an angle (A) in a range of 30 degrees to 60 degrees, the inclined wall surface (11c) being provided with a plurality of opening portions (11d) which are coaxial with the longitudinal axial lines (X-X) of the intake passages (71), and
a single common holder member (12) formed with a single mounting flange portion (12a) contacting on the common inclined wall surface (11c) of the air box (11), a plurality of the injection valve inserting cylindrical portions (12b) protruding downward from the mounting flange portion (12a), and injection valve inserting holes (12c) provided from an upper surface (12aa) of the mounting flange portion (12a) toward lower ends (12ba) of the respective injection valve inserting cylindrical portions (12b),
wherein the mounting flange portion (12a) of the common holder member (12) is fixedly provided so as to contact on the common inclined wall surface (11c) of the air box (11), the respective injection valve inserting cylindrical portions (12b) are inserted and provided in the air box (11) from the respective opening portions (11d) of the common inclinedwall surface (11c), and the second fuel injection valves (J2) are inserted and provided in the respective injection valve inserting holes (12c) of the common holder member (12) so that longitudinal axial lines (Y-Y) of the respective second fuel injection valves (J2) are provided coaxially with the longitudinal axial lines (X-X) of the intake passages (71) facing thereto.

Further, a third aspect of the present invention in addition to the above-described first and second aspects is as follows. A first seal member is provided between the injection valve inserting cylindrical portion of the holder member or the common holder member and the opening portion of the inclined wall surface or the common inclined wall surface. Further, a second seal member is provided between the injection valve inserting hole and a top end portion of the second fuel injection valve.

Furthermore, a fourth aspect of the present invention in addition to the above-described first and second aspects is as follows. A coupler for supplying electric current to a solenoid coil provided in the second fuel injection valve is provided within a range of an obtuse angle formed by the longitudinal axial line of the second fuel injection valve and the inclined wall surface or the common inclined wall surface.

According to the first aspect of the present invention, the throttle body provided with the intake passage is provided at the bottom wall portion of the air box, and the intake passage of the throttle body is opened and provided in the air box through the air funnel.

The upper wall portion of the air box is formed as the inclined wall surface having the acute angle with respect to the longitudinal axial line of the intake passage. Further, the second fuel injection valve is provided coaxially with the longitudinal axial line of the intake passage through the holder member, which is inserted into the opening portion of the inclined wall surface and fixed on the inclined wall surface.

The upper wall portion of the air box is formed as the inclined wall surface having the acute angle with respect to the longitudinal axial line of the intake passage. Thus, air flowing near the upper wall portion of the air box flows toward the opening portion of the air funnel while curving along the inclinedwall surface. At this time, the conventional connecting wall portion is not formed by the upper wall portion, and only the holder member having an approximately similar shape to that of the second fuel injection valve is projected at the upper wall portion. Thus, there are few cases that the large whirling flow is generated in the flow of the air flowing along the inclined wall surface.

Therefore, the fuel, which is injected from the second fuel injection valve provided coaxially with the longitudinal axial line of the intake passage, can be accurately supplied toward the center of the intake passage, without the fuel being deflected in one side and the flow of the fuel being diffused in the multidirection.

Further, since the large whirling flow is not generated, the flow of the air sucked into the intake passage through the air funnel can be made smooth, so that the suction efficiency of the sucked air is not reduced.

Furthermore, in the air box, only the holder member having the approximately similar shape to that of the second fuel injection valve is projected. Thus, the chamber capacityof the airbox is not remarkably reduced, so that the fuel injection device suitable for the motorcycle can be provided.

Further, the holder member is formed with the mounting flange portion and the injection valve inserting cylindrical portion, which is formed to have the acute inclination angle of A with respect to the mounting flange portion. Further, the injection valve inserting hole is provided from the upper end of the mounting flange portion to the lower end of the injection valve inserting cylindrical portion. Thus, the mounting flange portion of the holder member is fixed on the inclined wall surface of the air box, and the injection valve inserting cylindrical portion is inserted and provided in the air box through the opening portion of the inclined wall surface, and while keeping these states, the second fuel injection valve can be positioned and provided coaxially with the longitudinal axial line of the intake passage by the holder member.

Further, according to the second aspect of the present invention, a plurality of throttle bodies are parallelly provided in the side direction in the bottom wall portion of the air box. The intake passage of each throttle body is opened and provided in the air box through the air funnel.

The single common inclined wall surface is formed at the upper wall portion of the air box, where the wall surface crosses with respect to the longitudinal axial line of the intake passage to have the acute angle of A . The common holder member is provided on the common inclined wall surface. Further, each second fuel injection valve is provided facing to the intake passage of each throttle body, and provided coaxially with the longitudinal axial line of each intake passage by the common holder member.

As described above, by forming the single common inclined wall surface at the upper wall portion of the air box, the single common holder member can be used, and a plurality of second fuel injection valves can be supported by the single common holder member.

Thereby, a mounting operation of the air box of the common holder member to the common inclined wall surface can be a single operation, and a plurality of second fuel injection valves can be supported by the single common holder member. Thus, the number of processes of the amounting operation, and the number of parts can be reduced, so that a manufacturing cost can be remarkably reduced.

Further, since the common holder member is the single member, a structure of the upper wall portion of the air box can be simplified. Thus, in the motorcycle especially in which the air box is exposed to the outside air, the appearance can be enhanced.

Further, the common holder member is formed with the single mounting flange portion, a plurality of injection valve inserting cylindrical portions, and the injection valve inserting holes. A plurality of the injection valve inserting cylindrical portions are formed having the inclination angle of A with respect to the mounting flange portion. The injection valve inserting holes are provided from the upper surface of the mounting flange portion toward the lower end of each injection valve inserting cylindrical portion.

Thereby, the mounting flange portion is fixed on the common inclined wall surface of the air box, and each injection valve inserting cylindrical portion is inserted and fixed in the air box through the opening portion of the common inclined wall surface, and while keeping these states, a top end portion of each second fuel injection valve can be supported by the injection valve inserting hole. Thus, each second fuel injection valve can be provided remarkably easy and accurately coaxially with each intake passage facing to each second fuel injection valve.

Further, according to the third aspect of the present invention, the first seal member is provided between the holder member or the common holder member and the opening portion of the inclined wall surface. Thus, the air does not flow into the air box from the atmosphere through an outer circumference part of the holder member, so that it can be accurately prevented to enter air or rain water containing a foreign substance into the air box.

Further, since the second seal member is provided between the top end portion of the second fuel injection valve and the injection valve inserting hole, the air does not flow into the air box from the atmosphere through an inner circumference part of the holder member, and the top end portion of the second fuel injection valve can be accurately positioned and provided to the fuel injection valve inserting hole. Thus, it is suitable for keeping concentric accuracy of the second fuel injection valve and the intake passage.

Furthermore, according to the fourth aspect of the present invention, the coupler outwardly projected from the second fuel injection valve is provided within the range of the obtuse angle B formed by the longitudinal axial line of the second fuel injection valve and the inclined wall surface. Thus, the projection of the coupler from the air box can be suppressed to be small as much as possible. Further, in the motorcycle especially in which the fuel injection valve is directly exposed to the outside air; it is preferable for protecting the fuel injection valve.

### BRIEF EXPLANATION OF DRAWINGS

Figure 1 is a longitudinal sectional view of a main portion illustrating a first example of a fuel injection device according to the present invention.
Figure 2 is a longitudinal sectional view of a main portion taken along a line D-D in Figure 1.
Figure 3 is an upper portion plan view in Figure 1.
Figure 4 is an upper portion plan view of a holder member used in Figure 1.
Figure 5 is a longitudinal sectional view taken along a line E-E in Figure 4.
Figure 6 is a longitudinal sectional view of a main portion illustrating a second example of a fuel injection device according to the present invention.
Figure 7 is a longitudinal sectional view of a main portion taken along a line H-H in Figure 6.
Figure 8 is an upper portion plan view of Figure 6.
Figure 9 is an upper portion plan view of a common holder member used in Figure 6.
Figure 10 is a longitudinal sectional view taken along a line K-K in Figure 9.
Figure 11 is a longitudinal sectional view taken along a line L-L in Figure 9.
Figure 12 is a simplified view of a known conventional fuel injection device.
Figure 13 is a longitudinal sectional view of a main portion of another known conventional fuel injection device.

### DETAILED DESCRIPTION OF PREFERRED EMBODIMENT

Hereinafter, one example of the fuel injection device according to the present invention will be described with drawings.

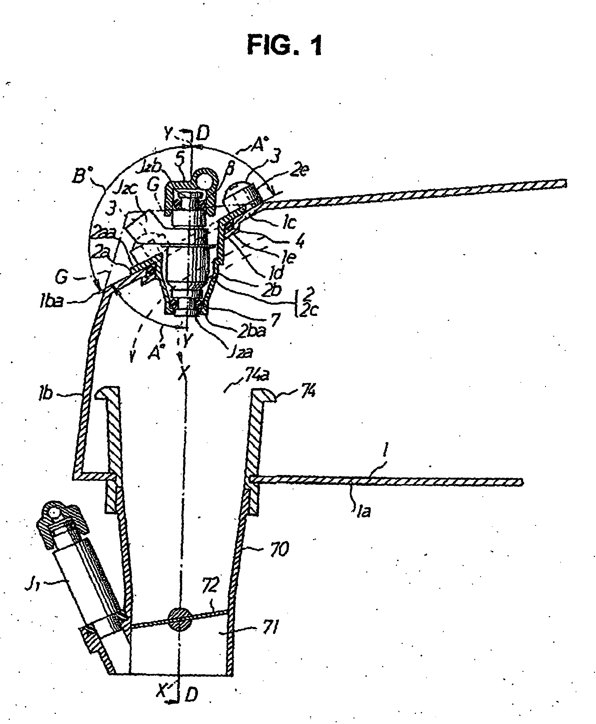

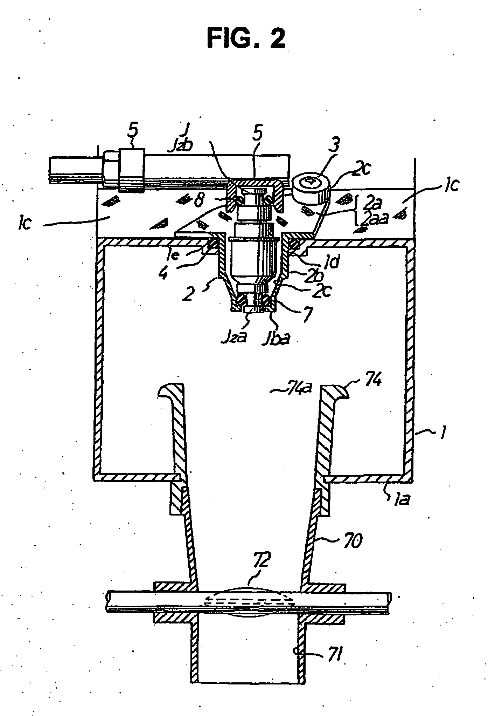

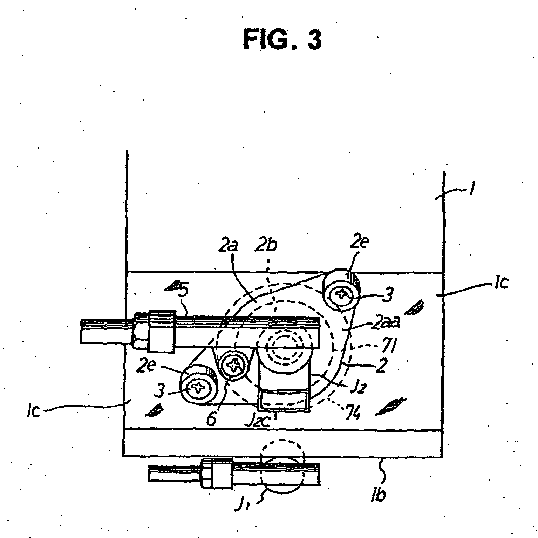

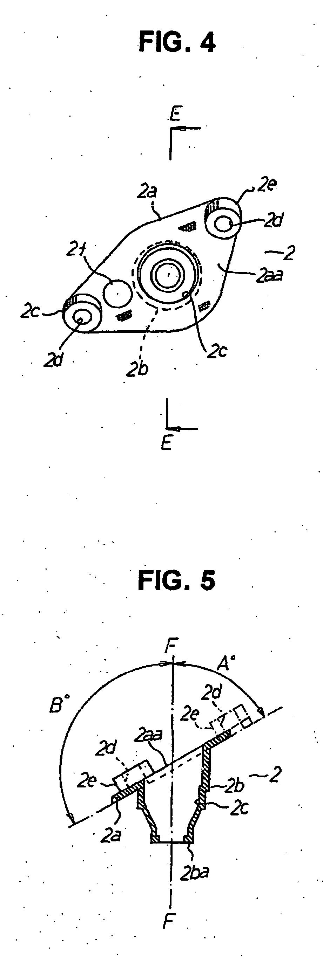

Figure 1 is a longitudinal sectional view of a main portion of the fuel injection device. Figure 2 is a longitudinal sectional view of a main portion taken along a line D-D in Figure 1. Figure 3 is an upper portion plan view in Figure 1. Figure 4 is an upper portion plan view of a holder member used in Figure 1. Figure 5 is a longitudinal sectional view taken along a line E-E in Figure 4.

In addition, structures of a throttle body, a first fuel injection valve and an air funnel are same as those of the conventional device, so that descriptions are omitted and same codes are used.

Code 1 is a box shaped air box having a filter element (not illustrated in the drawings) inside thereof. As for the air box 1, a bottom wall portion 1a mounted with a throttle body 70 is formed at a lower part, and a side wall portion 1b is connected from a left end toward an upper part. Further, an inclined wall surface 1c is connected in the right direction from an upper end 1ba of the side wall portion 1b, where the surface 1c has an acute angle of A with respect to a longitudinal axial line X-X of an intake passage 71. The throttle body 70 is mounted at the bottom wall portion 1a of the air box 1, and an air funnel 74 is opened and provided in the air box 1.

The inclined wall surface 1c crosses with respect to the longitudinal axial line X-X of the intake passage 71 to have the acute angle. As for the acute angle of A, the range of 30 degrees to 60 degrees is the most preferable, but it is not limited to this range.

Thatis, the inclinedwall surface 1c has a leftward declined surface in Figure 1. The inclined wall surface 1c on the right side of the longitudinal axial line X-X has the acute angle of A, and the inclined wall surface 1c on the left side of the longitudinal axial line X-X has an obtuse angle of B (180°-A) with respect to the longitudinal axial line X-X.

Further, the inclined wall surface 1c is provided with an opening portion 1d being coaxial with the longitudinal axial line X-X of the intake passage 71. The opening portion is recessed with a circular seal groove 1e for supporting a first seal member which is described below.

The opening portion 1d comprising such the circular seal groove 1e is not largely projected in the air box 1 from a lower portion of the inclined wall surface 1c as illustrated in the drawings.

Then, a holder member 2 will be described with Figures 4 and 5.

Code 2a is a mounting flange portion, which is inclined having an inclination angle of A with respect to a vertical line F-F in Figure 5. The inclination angle of A of the mounting flange portion 2a is the same angle of the crossing angle of A of the inclined wall surface 1c with respect to the longitudinal axial line X-X of the intake passage 71, and the vertical line F-F corresponds to the longitudinal axial line X-X of the intake passage 71.

Further, an injection valve inserting cylindrical portion 2b is projected downwardly in Figure 5 at the mounting flange portion 2a. The injection valve inserting cylindrical portion 2b is formed coaxially along the vertical line F-F. Further, a injection valve inserting hole 2c is provided through from an upper end 2aa of the mounting flange portion 2a toward a lower end 2ba of the injection valve inserting cylindrical portion 2b, and a top end portion of a second fuel injection valve, which will be described below, is inserted into the hole 2c.

The injection valve inserting hole 2c is also provided coaxially along the vertical line F-F.

Further, a mounting boss 2e and a fuel distribution pipe mounting hole 2f are provided at the upper end 2aa of the mounting flange portion 2a, where the mounting boss 2e is provided with a mounting hole 2d. In this example, two mounting bosses 2e are provided on both sides of the injection valve inserting cylindrical portion 2b.

Further, the mounting flange portion 2a of the holder member 2 is contacted and provided on the inclined wall surface 1c of the air box 1, and the injection valve inserting cylindrical portion 2b is inserted and provided in the air box 1 through the opening portion 1d. While keeping these states, a screw 3 is screwed toward the air box 1, where the screw 3 is inserted and provided in the mounting hole 2d of the mounting boss 2e. Thereby, the holder member 2 is fixed and provided on the inclined wall surface 1c of the air box 1.

Further, as described above, the injection valve inserting hole 2c of the holder member 2 is provided coaxially with the longitudinal axial line X-X of the intake passage 71 of the throttle body 70.

The injection valve inserting hole 2c is provided coaxially with the longitudinal axial line X-X, by forming the opening portion 1d provided at the inclined wall surface 1c coaxially with the longitudinal axial line X-X of the intake passage 71; forming the mounting flange portion 2a of the holder member 2 at the inclination angle of A, which is the same as the inclination angle of A of the inclined wall surface 1c, with respect to the vertical line F-F, which is coaxial with the longitudinal axial line X-X of the intake passage 71; and forming the injection valve inserting hole 2c and the injection valve inserting cylindrical portion 2b coaxially with respect to the vertical line F-F.

Further, in a state that the holder member 2 is mounted at the air box 1, a circular first seal member 4 is compressedly provided between an outer circumference of the injection valve inserting cylindrical portion 2b and the circular seal groove 1e, where the first seal member 4 comprises an elastic member such as a rubber material or the like.

Further, a top end portion J2a of a second fuel injection valve J2 is inserted into the injection valve inserting hole 2c, and a fuel distribution pipe 5 is fitted and provided in an rear end portion J2b of the valve J2. While keeping these states, the fuel distribution pipe 5 is screwed and fixed at the air box 1 by a screw 6 through the fuel distribution pipe mounting hole 2f.

As described above, the second fuel injection valve J2 is held and fixed by the holder member 2 and the fuel distribution pipe 5. At this time, the tope end portion J2a of the second fuel injection valve J2 is provided coaxially with the longitudinal axial line X-X of the intake passage 71, and airtightly held by a second seal member 7 provided in the injection valve inserting hole 2c. The rear end portion J2b of the second fuel injection valve J2 is provided coaxially with the longitudinal axial line X-X of the intake passage 71, and airtightly held by a third seal member 8 provided in the fuel distribution pipe 5.

As described above, the second fuel injection valve J2 is inserted and provided in the injection valve inserting hole 2c of the holder member 2 provided on the inclined wall surface 1c of the air box 1, and held by the holder member 2 and the fuel distribution pipe 5.

Further, the longitudinal axial line Y-Y of the second fuel injection valve J2 is provided coaxially with the longitudinal axial line X-X of the intake passage 71.

According to such the fuel injection device of the present invention, the longitudinal axial line Y-Y of the second fuel injection valve J2 is provided coaxially with the longitudinal axial line X-X of the intake passage 71, so that the fuel injected from the second fuel injection valve J2 is injected toward the center of the intake passage 71.

On the other hand, as for the flow of the air flowing in the air box 1, since the inclined wall surface 1c, which crosses with respect to the longitudinal axial line X-X of the intake passage 71 to have the acute angle of A, is formed at the upper end 1ba of the side wall portion 1b of the air box 1, the flow of the air near the inclined wall surface 1c is curved toward the bottom wall portion 1a. Thus, the large whirling flow, which is generated in the conventional device, is not generated.

As described above, since the large whirling flow, which is generated in the conventional device, does not act to the fuel injected from the second fuel injection valve J2, the high-speed fuel can be supplied accurately and stably from the second fuel injection valve J2 into the intake passage 71.

Further, as described above, the air flowing in the air box 1 flows into an opening portion 74a of the air funnel 74 while curving along the inclined wall surface 1c. Thus, the suction efficiency of the air is not reduced.

Further, as for a part projected toward the inside of the air box 1, the opening portion 1d and the injection valve inserting cylindrical portion 2b are formed, where the opening portion 1d comprises the circular seal groove 1e formed at the inclined wall surface 1c. The opening portion is formed in a small shape in order to recess the circular seal groove 1e, and the injection valve inserting cylindrical portion 2b is formed also in a small shape having an approximately similar shape to that of the top end portion J2a of the second fuel injection valve J2. Thus, the chamber capacity of the air box 1 is not remarkably reduced, and it is preferable for mounting the device to the motorcycle especially in which the shape of the air box 1 is limited.

Further, the fuel supplying from the second injection valve J2 to intake passage 71 is carried out efficiently without disturbing the air flow in the air box 1, since the opening portion 1d and the injection valve inserting cylindrical portion 2b can be kept in a small size.

Further, the holder member 2 is for providing the second fuel injection valve J2, which is provided at the inclined wall surface 1c, coaxially with the longitudinal axial line X-X of the intake passage 71, and the holder member 2 is formed with the mounting flange portion 2a, the injection valve inserting cylindrical portion 2b and the injection valve inserting hole 2c, where the portion 2b crosses with respect to the mounting flange portion 2a to have the inclination angle of A and the hole 2c is provided from the upper end 2aa of the mounting flange portion 2a toward the lower end 2ba of the inj ectionvalve inserting cylindrical portion 2b. The shape of the injection valve inserting cylindrical portion 2b is approximately similar to that of the top end portion J2a of the second fuel injection valve J2. Thus, the injection valve inserting cylindrical portion 2b can be formed at a remarkably low cost and made small in size and light in weight by a synthetic resin.

Further, according to the present invention, the first seal member 4 is contractedly provided between the outer circumference of the injection valve inserting cylindrical portion 2b of the holder member 2 and the circular seal groove 1e of the air box 1. Thus, it can be prevented to allow the air, the rain water or the like to enter into the air box 1 from the outer circumference of the holder member 2.

At this time, since the circular seal groove 1e is opened on the upper end surface 2aa of the inclined wall surface 1c, it can be prevented to make the opening portion 1d largely project toward the inside of the air box 1.

On the other hand, the top end portion J2a of the second fuel injection valve J2 is sealed by the second seal member 7, which is contractedly provided in the injection valve inserting hole 2c. Thus, it can be prevented to allow the air, the rain water or the like to enter into the air box 1 from the outer circumference of the second fuel injection valve J2.

At this time, the top end portion J2a of the second fuel injection valve J2 is provided coaxially with the injection valve inserting hole 2c by the second seal member 7, where the hole 2c is provided coaxially with the longitudinal axial line X-X of the intake passage 71. Thus, the second fuel injection valve J2 can be accurately provided coaxially with the intake passage 71.

Further, as for the fuel injection valve, the solenoid coil (it is not illustrated in the drawings) provided inside thereof is integrally formed with a coupler J2c receiving the electric current supplied from the outside, and the coupler J2c is projected outward from the second fuel injection valve J2.

According to the present invention, the coupler J2c formed at the second fuel injection valve J2 is provided within the range of the obtuse angle of B formed by the longitudinal axial line Y-Y of the second fuel injection valve J2 and the inclined wall surface 1c of the air box 1.

As described above, the coupler J2c formed at the second fuel injection valve J2 is provided at a part largely recessed on the inclined wall surface 1c (a part of an one-dot chain line G-G in Figure 1) . Thus, the coupler J2c is not largely projected toward the side direction from the air box 1, and the second fuel injection valve J2 including the coupler J2c can be provided near the air box 1, so that the whole air box 1 can be made compact.

Then, a second example of the fuel injection device of the present invention will be described with drawings.

The fuel injection device comprises a plurality of throttle bodies mounted at a single air box, that is, comprises a multiple throttle body.

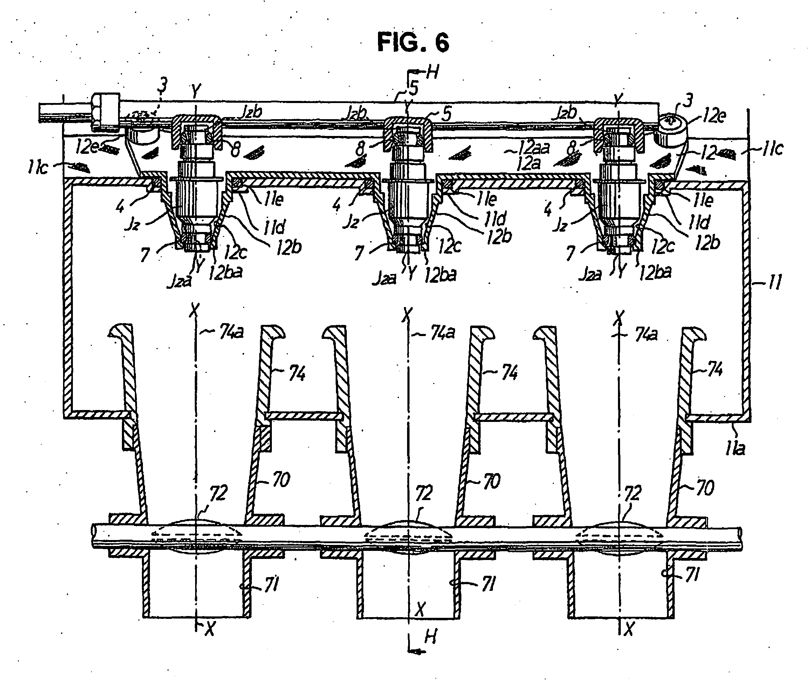

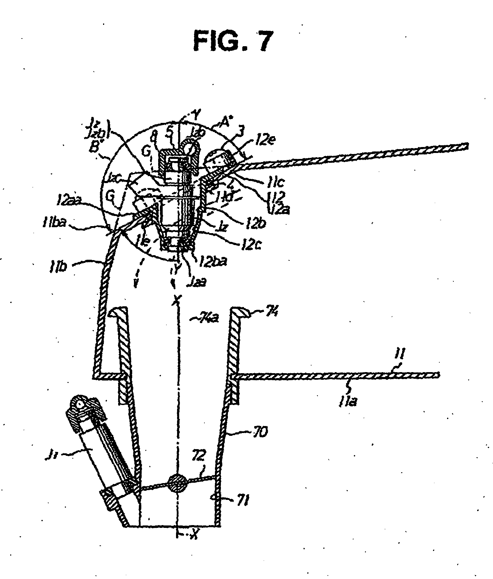

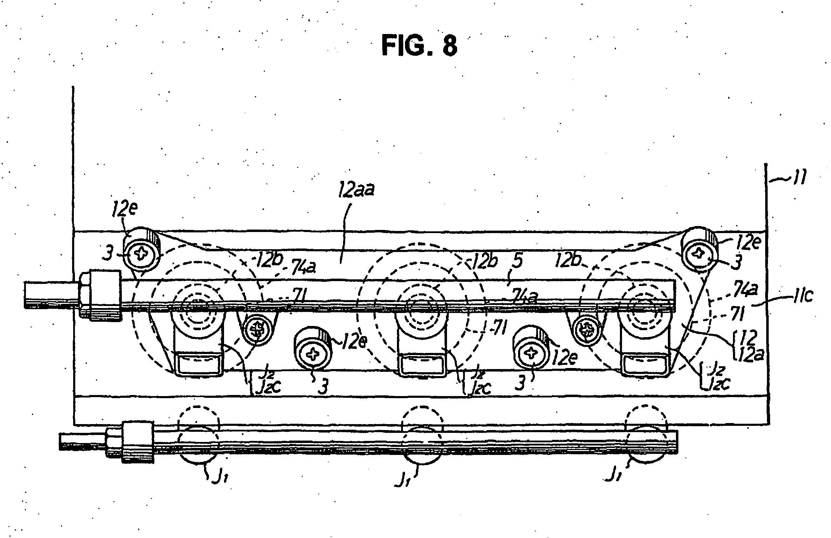

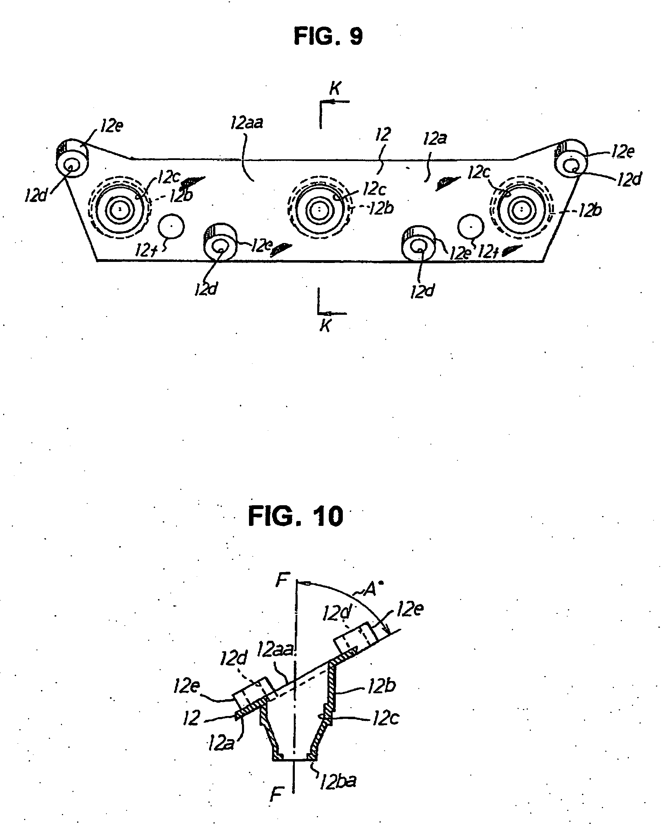

Figure 6 is a longitudinal sectional view of a main portion of a fuel injection device comprising a multiple throttle body. Figure 7 is a longitudinal sectional view of a main portion taken along a line H-H of Figure 6. Figure 8 is an upper portion plan view of Figure 6. Figure 9 is an upper portion plan view of a common holder member used in Figure 6. Figure 10 is a longitudinal sectional view taken along a line K-K of Figure 9. Figure 11 is a longitudinal sectional view taken along a line L-L of Figure 9. In addition, same codes are used to same structure parts as those of Figure 1, and descriptions are omitted.

Code 11 is a box shaped air box having a filter element (it is not illustrated in the drawings) inside thereof. The air box 11 has a bottom wall portion 11a at a lower part thereof, and a side wall portion 11b is connected from a left end of the bottom wall portion 11a in Figure 7 toward the upper direction. Further, a single common inclined wall surface 11c having an acute angle of A is connected from an upper end 11ba of the side wall portion 11b toward the right direction.

A plurality of throttle bodies 70 comprising the air funnel 74 is mounted and provided in the side direction at the bottom wall portion 11a. In this example, as illustrated in Figure 6, three throttle bodies 70 are parallelly provided in the side direction.

The single common inclined wall surface 11c having the acute angle of A is an inclined wall surface having a crossing angle of A with respect to the longitudinal axial line X-X of the intake passage 71, as illustrated in Figure 7. Further, the single common inclined wall surface 11c is a common inclined wall surface facing to the intake passage 71 of each throttle body 70.

It is the most preferable that such the crossing angle of A is within the range of 30 degrees to 60 degrees like the example 1.

Further, the common inclined wall surface 11c is provided with a plurality of opening portions 11d in the side direction thereof, where the opening portions are coaxial with the longitudinal axial line X-X of each intake passage 71. Further, a circular seal groove 11e is recessed at each opening portion 11d.

Such the circular seal groove 11e comprising the opening portion 11d is not projected largely toward the inside of the air box 11.

Then, a single common holder member 12 will be described with Figures 9, 10 and 11.

Code 12a is a mounting flange portion, which is inclined and formed having an inclination angle of A with respect to a vertical line F-F in Figure 10, and extended in the side direction. The inclination angle of A of the mounting flange portion 12a is the same as the crossing angle of A of the common inclined wall surface 11c with respect to the longitudinal axial line X-X of the intake passage 71, and the vertical line F-F corresponds to the longitudinal axial line X-X of the intake passage 71.

Further, the mounting flange portion 12a has an injection valve inserting cylindrical portion 12b, which is downwardly projected in Figure 10. As illustrated in Figure 11, a plurality of the injection valve inserting cylindrical portions 12b is formed in the side direction, and three portions 12b are parallelly provided in the side direction in this example.

Each injection valve inserting cylindrical portion 12b is formed coaxially along the vertical line F-F, and injection valve inserting holes 12 c are commonly provided from an upper end 12aa of the mounting flange portion 12a toward a lower end 12ba of each injection valve inserting cylindrical portion 12b. Each fuel injection valve inserting hole 12c is also formed coaxially with the vertical line F-F.

Further, a mounting boss 12e and a fuel distribution pipe mounting hole 12f are formed at the upper end 12aa of the mounting flange portion 12a, where the mounting boss 12e is provided with a mounting hole 12d.

In this example, four mounting bosses 12e are formed, and two fuel distribution pipe mounting holes 12f are formed.

Further, the mounting flange portion 12a of the common holder member 12 is contacted and provided on the common inclined wall portion 11c of the air box 11, and each injection valve inserting cylindrical portion 12b is inserted and provided in the air box 11 through each opening portion 11d. While keeping these states, a screw 3 inserted and provided in the mounting hole 12d of each mounting boss 12e is screwed to the air box 11. Thereby, the common holder member 12 is fixed and provided on the single common inclined wall surface 11c of the air box 11.

Further, as described above, each injection valve inserting hole 12c of the common holder member 12 is provided coaxially with the longitudinal axial line X-X of the intake passage 71 of each throttle body 70.

The hole 12c is provided coaxially with the longitudinal axial line X-X by forming each opening portion 11d coaxially with the longitudinal axial line X-X of the intake passage 71, where the opening portion 11d is provided at the common inclined wall surface 11c; forming and inclining the mounting flange portion 12a of the common holder member 12 at the inclination angle of A with respect the vertical line F-F, where the inclination angle of A of the mounting flange portion 12a is the same as the inclined angle of A of the common inclined wall surface 11c and the vertical line F-F is coaxial with the longitudinal axial line X-X of the intake passage 71; and forming each injection valve inserting hole 12c and each injection valve inserting cylindrical portion 12 coaxially with the vertical line F-F.

Further, in a state that the common holder member 12 is mounted to the air box 11, the circular first seal member 4 is compressedly provided between an outer circumference of each injection valve inserting cylindrical portion 12b and each circular seal groove 12e, where the first seal member 4 comprises the elastic member such as the rubber material or the like.

Further, the top end portion J2a of the second fuel injection valve J2 is inserted into each injection valve inserting hole 12c, and the fuel distribution pipe 5 is fitted and provided in the rear end portion J2b of the valve J2. While keeping these states, the fuel distribution pipe 5 is screwed and fixed at the air box 11 by the screw 6 through the fuel distribution pipe mounting hole 12f.

As described above, each second fuel injection valve J2 is held and fixed by the common holder member 12 and the fuel distribution pipe 5. At this time, the top end portion J2a of each second fuel injection valve J2 is provided coaxially with the longitudinal axial line X-X of the intake passage 71, and air-tightly sealed by the second seal member 7 provided in each injection valve inserting hole 12c. Further, the rear end portion J2b of each second fuel injection valve J2 is provided coaxially with the longitudinal axial line X-X of the intake passage 71, and air-tightly sealed by the third seal member 8 provided in the fuel distribution pipe 5.

As described above, each second fuel injection valve J2 is inserted and provided in each injection valve inserting hole 12c in the common holder member 12 provided on the common inclined wall surface 11c of the air box 11, and is held by the common holder member 12 and the fuel distribution pipe 5.

Further, the longitudinal axial line Y-Y of each second fuel injection valve J2 is provided coaxially with the longitudinal axial line X-X of the intake passage 71 of each throttle body 70 facing to the line Y-Y.

According to such the second example of the fuel injection device of the present invention, since the longitudinal axial line Y-Y of each second fuel injection valve J2 is provided coaxially with the longitudinal axial line X-X of each intake passage 71, the fuel injected from each second fuel injection valve J2 is injected toward the center of each intake passage 71.

On the other hand, as for the flow of the air flowing in the air box 11, the common inclined wall surface 11c is formed at the upper end 11ba of the side wall portion 11b of the air box 11, where the surface 11c crosses with respect to the longitudinal axial line X-X of the intake passage 71 to have the acute angle of A. Thus, the flow of the air near the inclined wall surface 11c is curved toward the bottom wall portion 11a, so that the large whirling flow, which is generated in the conventional device, is not generated.

As described above, the large whirling flow, which is generated in the conventional device, does not act to the fuel injected from each second fuel injection valve J2, so that the high-speed fuel can be supplied accurately and stably from each second fuel injection valve J2 into the intake passage 71 of each throttle body 70.

Descriptions of same actions and effects as those of the first example are omitted.

According to such the second example of the fuel injection device, since the single common inclined wall surface 11c is provided at the air box 11, the shape of the air box can be simplified. Further, the single mounting flange portion 12a is provided at the common holder member 12 contacted on the common inclined wall surface 11c, and a plurality of injection valve inserting cylindrical portions 12b, which is provided with the injection valve inserting holes 12c, is provided at the mounting flange portion 12a. Thus, the second fuel injection valve J2 can be mounted at the air box 11 with a remarkably easy structure without increasing the number of parts. Thereby, the number of processes of the mounting operation can be reduced, and the manufacturing cost can be remarkably reduced.

Further, when the screw 3 and the screw 6 are loosened to thereby remove the common holder member 12 from the air box 11, a plurality of second fuel injection valves J2 can be removed from the air box 11 at once. Thus, maintenance operability of the fuel distribution pipe 5 and the second fuel injection valve J2 can be remarkably enhanced.

In addition, as for the numbers of the throttle body and the second fuel injection valve provided corresponding to the throttle body, these are not limited to three in the above-example.

## Claims

1. A fuel injection device, comprising
a throttle body (70) provided in an air box (1) f rom a bottom wall portion (1a) of the air box (1) through an air funnel (74), in which the throttle body (70) has an intake passage (71) provided through the inside thereof, and the intake passage (71) is opened/closed by a throttle valve (72),
a first fuel injection valve (J1) provided to the throttle body (70) toward the intake passage (71) at the down stream side from the throttle valve (72),
a second fuel injection valve (J2) provided at an upper wall, portion of the air box (1) facing to an opening portion (74a) of the air funnel (74), so as to be coaxial with a longitudinal axial line (X-X) of the intake passage (71),
an inclined wall surface (1c) formed toward the upper wall portion of the air box (1) from an upper end (1ba) of a side wall portion (1b) which extends upward from a bottom wall portion (1a) of the air box (1), so as to cross with the longitudinal axial line (X-X) of the intake passage (71) at an angle (A) in a range of 30 degrees to 60 degrees, the inclined wall surface (1c) being provided with an opening portion (1d) which is coaxial with the longitudinal axial line (X-X) of the intake passage (71), and
a holder member (2) formed with a mounting flange portion (2a) contacting on the inclined wall surface. (1c) of the air box (1), an injection valve inserting cylindrical portion (2b) protruding downward from the mounting flange portion (2a), and an injection valve inserting hole (2c) provided from an upper end (2aa) of the mounting flange portion (2a) toward a lower end (2ba) of the injection valve inserting cylindrical portion (2b),
wherein the mounting flange portion (2a) of the holder member (2) is fixedly provided so as to contact on the inclined wall surface (1c) of the air box (1), the injection valve inserting cylindrical portion (2b) is inserted and provided in the air box (1) from the opening portion (1d) of the inclined wall surface (1c), and the second fuel injection valve (J2) is inserted and provided in the injection valve inserting hole (2c) of the holder member (2) so that a longitudinal axial line (Y-Y) of the second fuel injection valve (J2) is provided coaxially with the longitudinal axial line (X-X) of the intake passage (71).

2. A fuel injection device, comprising
a plurality of throttle bodies (70), in which the throttle bodies (70) have intake passages (71) provided through the insides thereof, the intake passages (71) being opened/closed by throttle valves (72), and the throttle bodies (70) being provided in an air box (11) from a bottom wall portion (11a) of the air box (11) through air funnels (74),
first fuel injection valves (J1) provided to the throttle bodies (70) toward the intake passages (71) at the down stream side from the throttle valves (72),
a plurality of second fuel injection valves (J2) provided at an upper wall portion of the air box (11) facing to opening portions (74a) of the respective air funnels (74), so as to be coaxial with longitudinal axial lines (X-X) of the respective intake passages (71),
a single common inclined wall surface (11c) formed toward the upper wall portion of the air box (11) from an upper end (11ba) of a side wall portion (11b) which extends upward from a bottom wall portion (11a) of the air box (11), so as to cross with the longitudinal axial lines (X-X) of the intake passages (71) at an angle (A) in a range of 30 degrees to 60 degrees, the inclined wall surface (11c) being provided with a plurality of opening portions (11d) which are coaxial with the longitudinal axial lines (X-X) of the intake passages (71), and
a single common holder member (12) formed with a single mounting flange portion (12a) contacting on the common inclined wall surface (11c) of the air box (11), a plurality of the injection valve inserting cylindrical portions (12b) protruding downward from the mounting flange portion (12a), and injection valve inserting holes (12c) provided from an upper surface (12aa) of the mounting flange portion (12a) toward lower ends (12ba) of the respective injection valve inserting cylindrical portions (12b),
wherein the mounting flange portion (12a) of the common holder member (12) is fixedly provided so as to contact on the common inclined wall surface (11c) of the air box (11), the respective injection valve inserting cylindrical portions (12b) are inserted and provided in the air box (11) from the respective opening portions (11d) of the common inclined wall surface (11c), and the second fuel injection valves (J2) are inserted and provided in the respective injection valve inserting holes (12c) of the common holder member (12) so that longitudinal axial lines (Y-Y) of the respective second fuel injection valves (J2) are provided coaxially with the longitudinal axial lines (X-X) of the intake passages (71) facing thereto.

3. The fuel injection device according to claim 1 or 2, wherein a first seal member (4) is provided between the injection valve inserting cylindrical portion (2b; 12b) of the holder member (2, 12) and the opening portion (1d; 11d) of the inclined wall surface (1c; 11c), and a second seal member (7) is provided between the injection valve inserting hole (2c; 12c) and a top end portion (J2a) of the second fuel injection valve (J2).

4. The fuel injection device according to claim 1 or 2, wherein a coupler (J2c) for supplying electric current to a solenoid coil provided inside the second fuel injection valve (J2) is provided within a range of an obtuse angle (B) formed by the longitudinal axial line (Y-Y) of the second fuel injection valve (J2) and the inclined wall surface (1c; 11c).

## Patentansprüche

1. Kraftstoffeinspritzvorrichtung, aufweisend
einen Drosselkörper (70), der in einem Luftbehälter (1) von einem unteren Wandabschnitt (1a) des Luftbehälters (1) über einen Luftschacht (74) vorgesehen ist, wobei der Drosselkörper (70) einen Einlasskanal (71) aufweist, der durch dessen Innenseite hindurch vorgesehen ist, und der Einlasskanal (71) mittels einer Drosselklappe (72) geöffnet/geschlossen wird,
ein erstes Kraftstoffeinspritzventil (J1), das an dem Drosselkörper (70) in Richtung zu dem Einlasskanal (71) an der Seite stromabwärts von der Drosselklappe (72) vorgesehen ist,
ein zweites Kraftstoffeinspritzventil (J2), das in einem oberen Wandabschnitt des Luftbehälters (1) einem Öffnungsabschnitt (74a) des Luftschachtes (74) zugewandt derart vorgesehen ist, dass es koaxial zu einer Längsachslinie (X-X) des Einlasskanals (71) ist,
eine schräge Wandfläche (1c), die in Richtung zu dem oberen Wandabschnitt des Luftbehälters (1) von einem oberen Ende (1ba) eines Seitenwandabschnitts (1b), welcher sich von dem unteren Wandabschnitt (1a) des Luftbehälters (1) nach oben erstreckt, derart ausgebildet ist, dass sie die Längsachslinie (X-X) des Einlasskanals (71) in einem Winkel (A) in einem Bereich von 30 Grad bis 60 Grad kreuzt, wobei die schräge Wandfläche (1c) mit einem Öffnungsabschnitt (1d) versehen ist, welcher koaxial zu der Längsachslinie (X-X) des Einlasskanals (71) ist, und
ein Halteelement (2), das mit einem Montageflanschabschnitt (2a), der an der schrägen Wandfläche (1c) des Luftbehälters (1) kontaktiert, einem zylindrischen Einspritzventileinsetzabschnitt (2b), der von dem Montageflanschabschnitt (2a) nach unten vorsteht, und einer Einspritzventileinsetzöffnung (2c) versehen ist, die von einem oberen Ende (2aa) des Montageflanschabschnitts (2a) in Richtung zu einem unteren Ende (2ba) des zylindrischen Einspritzventileinsetzabschnitts (2b) vorgesehen ist,
wobei der Montageflanschabschnitt (2a) des Halteelements (2) in festem Kontakt mit der schrägen Wandfläche (1c) des Luftbehälters (1) vorgesehen ist, der zylindrische Einspritzventileinsetzabschnitt (2b) von dem Öffnungsabschnitt (1d) der schrägen Wandfläche (1c) in dem Luftbehälter (1) eingesetzt und vorgesehen ist, und das zweite Kraftstoffeinspritzventil (J2) in der Einspritzventileinsetzöffnung (2c) des Halteelements (2) derart eingesetzt und vorgesehen ist, dass eine Längsachslinie (Y-Y) des zweiten Kraftstoffeinspritzventils (J2) koaxial zu der Längsachslinie (X-X) des Einlasskanals (71) vorgesehen ist.

2. Kraftstoffeinspritzvorrichtung, aufweisend
eine Mehrzahl von Drosselkörpern (70), wobei die Drosselkörper (70) Einlasskanäle (71) aufweisen, die durch deren Innenseiten hindurch vorgesehen sind, die Einlasskanäle (71) mittels Drosselklappen (72) geöffnet/geschlossen werden, und die Drosselkörper (70) in einem Luftbehälter (11) von einem unteren Wandabschnitt (11a) des Luftbehälters (11) durch Luftschächte (74) hindurch vorgesehen sind,
erste Kraftstoffeinspritzventile (J1), die an den Drosselkörpern (70) in Richtung zu den Einlasskanälen (71) an der Seite stromabwärts von den Drosselklappen (72) vorgesehen sind,
eine Mehrzahl von zweiten Kraftstoffeinspritzventilen (J2), die in einem oberen Wandabschnitt des Luftbehälters (11) Öffnungsabschnitten (74a) der jeweiligen Luftschächte (74) zugewandt derart vorgesehen sind, dass sie koaxial zu Längsachslinien (X-X) der jeweiligen Einlasskanäle (71) sind,
eine einzige gemeinsame schräge Wandfläche (11c), die in Richtung zu dem oberen Wandabschnitt des Luftbehälters (11) von einem oberen Ende (11ba) eines Seitenwandabschnitts (11b), welcher sich von dem unteren Wandabschnitt (11a) des Luftbehälters (11) nach oben erstreckt, derart ausgebildet ist, dass sie die Längsachslinien (X-X) der Einlasskanäle (71) in einem Winkel (A) in einem Bereich von 30 Grad bis 60 Grad kreuzt, wobei die schräge Wandfläche (11c) mit einer Mehrzahl von Öffnungsabschnitten (11d) versehen ist, welche koaxial zu den Längsachslinien (X-X) der Einlasskanäle (71) sind, und
ein einziges gemeinsames Halteelement (12), das mit einem einzigen Montageflanschabschnitt (12a), der an der gemeinsamen schrägen Wandfläche (11c) des Luftbehälters (1) kontaktiert, einer Mehrzahl von zylindrischen Einspritzventileinsetzabschnitten (12b), die von dem Montageflanschabschnitt (12a) nach unten vorstehen, und Einspritzventileinsetzöffnungen (12c) versehen ist, die von einer oberen Fläche (12aa) des Montageflanschabschnitts (12a) in Richtung zu unteren Enden (12ba) der jeweiligen zylindrischen Einspritzventileinsetzabschnitte (12b) vorgesehen sind,
wobei der Montageflanschabschnitt (12a) des gemeinsamen Halteelements (12) in festem Kontakt mit der gemeinsamen schrägen Wandfläche (11c) des Luftbehälters (11) vorgesehen ist, die jeweiligen zylindrischen Einspritzventileinsetzabschnitte (12b) von den jeweiligen Öffnungsabschnitten (11d) der gemeinsamen schrägen Wandfläche (11c) in dem Luftbehälter (11) eingesetzt und vorgesehen sind, und die zweiten Kraftstoffeinspritzventile (J2) in den jeweiligen Einspritzventileinsetzöffnungen (12c) des gemeinsamen Halteelements (12) derart eingesetzt und vorgesehen sind, dass die Längsachslinien (Y-Y) der jeweiligen zweiten Kraftstoffeinspritzventile (J2) koaxial zu den Längsachslinien (X-X) der diesen zugewandten Einlasskanäle (71) vorgesehen sind.

3. Kraftstoffeinspritzvorrichtung nach Anspruch 1 oder 2,
wobei ein erstes Dichtungselement (4) zwischen dem zylindrischen Einspritzventileinsetzabschnitt (2b; 12b) des Halteelements (2; 12) und dem Öffnungsabschnitt (1d; 11d) der schrägen Wandfläche (1c; 11c) vorgesehen ist, und ein zweites Dichtungselement (7) zwischen der Einspritzventileinsetzöffnung (2c; 12c) und einem oberen Endabschnitt (J2a) des zweiten Kraftstoffeinspritzventils (J2) vorgesehen ist.

4. Kraftstoffeinspritzvorrichtung nach Anspruch 1 oder 2,
wobei ein Verbindungsstück (J2c) zum Zuführen von elektrischem Strom zu einer in dem zweiten Kraftstoffeinspritzventil (J2) vorgesehenen Solenoidspule innerhalb eines Bereichs eines stumpfen Winkels (B) vorgesehen ist, der von der Längsachslinie (Y-Y) des zweiten Kraftstoffeinspritzventils (J2) und der schrägen Wandfläche (1c; 11c) gebildet wird.

## Revendications

1. Dispositif d'injection de carburant comportant
- un corps de soupape d'étranglement (70) qui est disposé dans un réservoir à air (1) en s'étendant depuis la partie de paroi inférieure (1a) du réservoir à air (1) à travers un entonnoir à air (74) et qui comporte à l'intérieur un conduit d'admission d'air (71) pouvant être ouvert/fermé par un papillon (72),
- une première soupape d'injection de carburant (J1) disposée sur le corps de la soupape d'étrangement (70) en aval du papillon (72) et orientée vers le conduit d'admission d'air (71),
- une seconde soupape d'injection de carburant (J2) disposée dans la partie de paroi supérieure du réservoir à air (1) face à l'ouverture (74a) de l'entonnoir à air (74) afin d'être coaxiale avec l'axe longitudinal (X-X) du conduit d'admission d'air (71),
- une surface de paroi (1 c) inclinée vers la partie de paroi supérieure du réservoir à air (1) depuis l'extrémité supérieure (1ba) de la partie de paroi latérale (1b) qui s'étend vers le haut depuis la partie de paroi inférieure (1a) du réservoir à air (1) de façon à couper l'axe longitudinal (X-X) du conduit d'admission d'air (71) avec un angle (A) compris entre 30 et 60 degrés, ladite surface de paroi inclinée (1c) étant pourvue d'un orifice (1d) coaxial avec l'axe longitudinal (X-X) du conduit d'admission d'air (71), et,
- un élément de support (2) pourvu d'une bride d'assemblage (2a) venant au contact de la surface de paroi inclinée (1c) du réservoir à air (1), d'une partie cylindrique (2b) destinée à l'insertion d'une soupape d'injection et saillante vers le bas depuis la bride d'assemblage (2a), et, d'un orifice (2c) destiné à l'insertion d'une soupape d'injection et s'étendant depuis l'extrémité supérieure (2aa) de la bride d'assemblage (2a) jusqu'à l'extrémité inférieure (2ba) de la partie cylindrique (2b) destinée à l'insertion d'une soupape d'injection,
**dans lequel**
- la bride d'assemblage (2a) de l'élément de support (2) est fixée fermement pour être au contact de la surface de paroi inclinée (1 c) du réservoir à air (1),
- la partie cylindrique (2b) destinée à l'insertion d'une soupape d'injection est engagée et agencée dans le réservoir à air (1) par l'orifice (1d) de la surface de paroi inclinée (1c), et,
- la seconde soupape d'injection de carburant (J2) est engagée et agencée dans l'orifice (2c) de l'élément de support (2) destiné à l'insertion d'une soupape d'injection de sorte que l'axe longitudinal (Y-Y) de la seconde soupape d'injection de carburant (J2) et l'axe longitudinal (X-X) du conduit d'admission d'air (71) soient coaxiaux.

2. Dispositif d'injection à carburant comportant
- plusieurs corps de soupapes d'étranglement (70) qui comportent à l'intérieur un conduit d'admission d'air (71) pouvant être ouvert/fermé par un papillon (72) et qui sont disposés dans un réservoir à air (11) en s'étendant depuis une partie de paroi inférieure (11a) du réservoir à air (11) à travers des entonnoirs à air (74),
- des premières soupapes d'injection de carburant (J1) disposées sur le corps des soupapes d'étranglement (70) en aval du papillon (72) et orientées vers les conduits d'admission d'air (71),
- plusieurs secondes soupapes d'injection de carburant (J2) disposées dans la partie de paroi supérieure du réservoir à air (11) face aux ouvertures (74a) des entonnoirs à air (74) correspondants afin d'être coaxiales avec l'axe longitudinal (X-X) des conduits d'admission d'air (71) correspondants,
- une surface de paroi unique (11 c) inclinée vers la partie de paroi supérieure du réservoir à air (11) depuis l'extrémité supérieure (11 ba) de la partie de paroi latérale (11 b) qui s'étend vers le haut depuis la partie de paroi inférieure (11a) du réservoir à air (11) de façon à couper l'axe longitudinal (X-X) des conduits d'admission d'air (71) avec un angle (A) compris entre 30 et 60 degrés, ladite surface de paroi inclinée (11c) étant pourvue de plusieurs orifices (11d) coaxiaux avec l'axe longitudinal (X-X) des conduits d'admission d'air (71), et
- un élément de support unique (12) pourvu d'une bride d'assemblage unique (12a) venant au contact de la surface de paroi inclinée (11c) du réservoir à air (11), de plusieurs parties cylindriques (12b) destinées à l'insertion des soupapes d'injection et saillantes vers le bas depuis la bride d'assemblage (12a), et, d'orifices (12c) destinés à l'insertion des soupapes d'injection et s'étendant depuis une surface supérieure (12aa) jusqu'à l'extrémité inférieure (12ba) des parties cylindriques (12b) correspondantes destinées à l'insertion des soupapes d'injection,
**dans lequel**
- la bride d'assemblage (12a) de l'élément de support commun (12) est fixée fermement pour être au contact de la surface de paroi inclinée commune (11c) du réservoir à air (11),
- les parties cylindriques (12b) correspondantes destinées à l'insertion des soupapes d'injection sont engagées et agencées dans le réservoir à air (11) par les orifices correspondants (11d) de la surface de paroi inclinée commune (11c), et,
- les secondes soupapes d'injection de carburant (J2) sont engagées et agencées dans les orifices (12c) de l'élément de support commun (12) destinés à l'insertion des soupapes d'injection de sorte que les axes longitudinaux (Y-Y) des secondes soupapes d'injection de carburant (J2) et les axes longitudinaux (X-X) des conduits d'admission d'air (71) leur faisant face soient coaxiaux.

3. Dispositif d'injection de carburant selon l'une des revendications 1 ou 2,
**dans lequel**
un premier élément d'étanchéité (4) est disposé entre, d'une part, la partie cylindrique (2b, 12b) de l'élément de support (2, 12) destinée à l'insertion d'une soupape d'injection, et, d'autre part, l'orifice (1d, 11 d) de la paroi inclinée (1c, 11 c), et, un second élément d'étanchéité (7) est disposé entre, d'une part, l'orifice (2c, 12c) destiné à l'insertion d'une soupape d'injection et, d'autre part, l'extrémité supérieure (J2a) de la seconde soupape d'injection de carburant (J2).

4. Dispositif d'injection de carburant selon l'une des revendications 1 ou 2,
**dans lequel**
un coupleur (J2c) pour alimenter en courant électrique un solénoïde est disposé à l'intérieur de la seconde soupape d'injection de carburant (J2) dans la zone ménagée par un angle obtus de (B) formé par l'axe longitudinal (Y-Y) de la seconde soupape d'injection de carburant (J2) et la surface de la paroi inclinée (1 c, 11 c).
